# EUROPEAN PATENT APPLICATION

(11) **EP 2 846 554 A1**
(43) Date of publication of application: **11.03.2015**
(21) Application number: 14169908.2
(22) Date of filing: 26.05.2014
(51) Int. Cl.: H04N 21/422, H04N 5/44

(54) **A method, an electronic device, and a computer program**

(30) Priority: 19.08.2013 JP 2013169980
(71) Applicant: Kabushiki Kaisha Toshiba, Tokyo 105-8001 (JP)
(72) Inventor: Ojima, Masahiko, Tokyo, 105-8001 (JP); Manabe, Shinichiro, Tokyo, 105-8001 (JP); Sakaguchi, Tomonori, Tokyo, 105-8001 (JP); Koda, Takuya, Tokyo, 105-8001 (JP); Shimbayashi, Mitsuru, Tokyo, 105-8001 (JP)
(74) Representative: Henkel, Breuer & Partner

(57) **Abstract**

According to one embodiment, a method includes: receiving a sentence corresponding to a voice of a user for operating an electronic device (200), the sentence including a first character string and one or more second character strings, the first character string corresponding to a reserved word used in searching information by the electronic device (200); displaying the first character string in a first format and the one or more second character strings in a second format different from the first format, the first character string correctable by a user operation, the user operation to be input by using a display area of the first character string; generating a search command including the first character string; and transmitting the search command to the electronic device (200).

## Description

### FIELD

Embodiments described herein relate generally to a method, an electronic device, and a computer program.

### BACKGROUND

In recent years, devices comprising a function that periodically records all programs of a plurality of channels have been widely used as televisions comprising a video recording and reproducing function or video recording and reproducing devices. With such a function provided, a user often views a broadcasted program at a later date, so that a function for searching for a desired recorded program becomes important in a video recording and reproducing device.

To avoid troublesomeness with entering a search key, proposed is a video recording and reproducing device in which the user can search for a recorded program by vocally inputting a search key through a remote controller.

However, in a case of searching by voice input, a video recording and reproducing apparatus may fail to correctly recognize a search key vocally input due to a manner of speaking of the user. Accordingly, it is desired to provide a search using voice input that is convenient for a user.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary diagram illustrating the configuration of a video recording and reproducing system according to a first embodiment;
FIG. 2 is an exemplary hardware configuration diagram of a mobile terminal in the embodiment;
FIG. 3 is an exemplary block diagram illustrating functional configurations of the mobile terminal and a digital television in the embodiment;
FIG. 4 is an exemplary diagram illustrating an example of a reserved word database in the embodiment;
FIG. 5 is an exemplary diagram illustrating an example of generating a search command from an input sentence using a syntax rule in the embodiment;
FIG. 6 is an exemplary flowchart illustrating the procedure of a command generating process in the first embodiment;
FIG. 7 is an exemplary flowchart illustrating the procedure of the command generating process in the first embodiment;
FIG. 8 is an exemplary diagram illustrating an example of a menu bar in the first embodiment;
FIG. 9 is exemplary diagram illustrating an example of a voice input screen in the first embodiment;
FIG. 10 is an exemplary diagram illustrating an example of a display screen of an input sentence of which search-enabled character string is highlighted in the first embodiment;
FIGS. 11A to 11C are exemplary diagrams illustrating examples of a screen displaying a list of candidate words in the first embodiment;
FIG. 12 is an exemplary diagram illustrating a display example of a search result by a search command generated by selecting "past program table" as a search key type "location";
FIG. 13 is an exemplary diagram illustrating a display example of a search result by a search command generated by selecting "recommendation" as a search key type "location";
FIG. 14 is an exemplary flowchart illustrating the procedure of a command generating process according to a second embodiment;
FIG. 15 is an exemplary diagram illustrating an example of displaying the number of candidates at the lower right of a search-enabled character string in the second embodiment;
FIG. 16 is an exemplary diagram illustrating an example of displaying the search-enabled character string from which a portion causing false recognition can be deleted according to a third embodiment;
FIG. 17 is an exemplary diagram illustrating a transition in a screen when a digital television is detected according to a modification of the embodiment;
FIG. 18 is an exemplary diagram illustrating an example of a screen of a present program table in the modification of the embodiment;
FIG. 19 is an exemplary diagram illustrating an example of a next program screen in the modification of the embodiment;
FIG. 20 is an exemplary diagram illustrating a screen example when a device is not registered yet in the modification of the embodiment;
FIGS. 21A and 21B are exemplary diagrams illustrating a screen example when the device is connected in the modification of the embodiment;
FIG. 22 is an exemplary diagram illustrating an example of ON/OFF operation from a mobile terminal side of the digital television in the modification of the embodiment;
FIG. 23 is an exemplary diagram illustrating a screen example of detailed program information in the modification of the embodiment;
FIGS. 24A and 24B are exemplary diagrams illustrating an example of a remote controller detail screen in the modification of the embodiment;
FIG. 25 is an exemplary diagram illustrating an example of a text input screen in the modification of the embodiment;
FIG. 26 is an exemplary diagram illustrating an example of a setting screen in the modification of the embodiment;
FIG. 27 is an exemplary diagram illustrating an example of a device list screen in the modification of the embodiment;
FIG. 28 is an exemplary diagram illustrating an example of a detailed information screen of a device in the modification of the embodiment;
FIG. 29 is an exemplary diagram illustrating an example of a channel display setting screen in the modification of the embodiment;
FIG. 30 is an exemplary diagram illustrating an example of a region setting screen in the modification of the embodiment; and
FIG. 31 is an exemplary diagram illustrating an example of an application information screen in the modification of the embodiment.

### DETAILED DESCRIPTION

In general, according to one embodiment, a method comprises: receiving a sentence corresponding to a voice of a user for operating an electronic device, the sentence including a first character string and one or more second character strings, the first character string corresponding to a reserved word used in searching information by the electronic device; displaying the first character string in a first format and the one or more second character strings in a second format different from the first format, the first character string correctable by a user operation, the user operation to be input by using a display area of the first character string; generating a search command comprising the first character string; and transmitting the search command to the electronic device.

Hereinafter, the embodiments will be described in detail with reference to the accompanying drawings.

### First embodiment

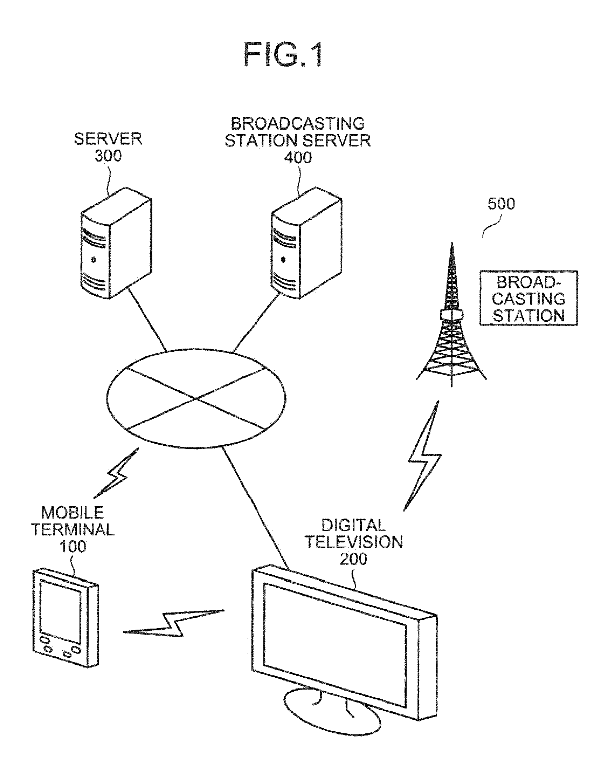

As illustrated in FIG. 1, a video recording and reproducing system according to a first embodiment has a configuration in which a mobile terminal 100 and a digital television 200 are connected via a wireless network such as Wifi (registered trademark) . As illustrated in FIG. 1, the mobile terminal 100 and the digital television 200 are connected to a server 300 such as a service provider on the Internet and a broadcasting station server 400. The digital television 200 receives a broadcast wave from a broadcasting station 500.

The digital television 200 according to the first embodiment comprises a tuner for receiving digital broadcasting mounted therein and a function for recording and reproducing a broadcasted program. The digital television 200 according to the first embodiment also comprises a function as a Web browser that can search or display various sites on the Internet. The digital television 200 according to the first embodiment conforms to Hybridcast (registered trademark), receives the broadcast wave from the broadcasting station 500, and receives a content or an application related to the broadcasted program from the broadcasting station server 400 or the server 300. Then the digital television 200 can start the application and the like to display the content linked with the broadcasted program on the broadcasted program.

The first embodiment describes the digital television 200 as an example of a video recording and reproducing device. However, the video recording and reproducing device is not limited thereto as long as the device comprises a video recording and reproducing function. For example, the video recording and reproducing device may be a device such as a set-top box or a hard disc recorder that comprises a tuner for receiving the broadcast wave and the video recording and reproducing function and processes an image to be output to an externally connected display device.

The mobile terminal 100 is an electronic device functioning as a remote controller that performs operation on the digital television 200, and implemented as a cellular telephone such as a smart phone, a tablet terminal, or a slate terminal. The mobile terminal 100 executes a predetermined application program to perform operation on the digital television 200. The digital television 200 according to the first embodiment conforms to Hybridcast (registered trademark), and receives a content or an application related to the broadcasted program from the broadcasting station server 400 or the server 300. Then the digital television 200 can start the application and the like to display the content linked with the program broadcasted by the digital television 200 on the broadcasted program.

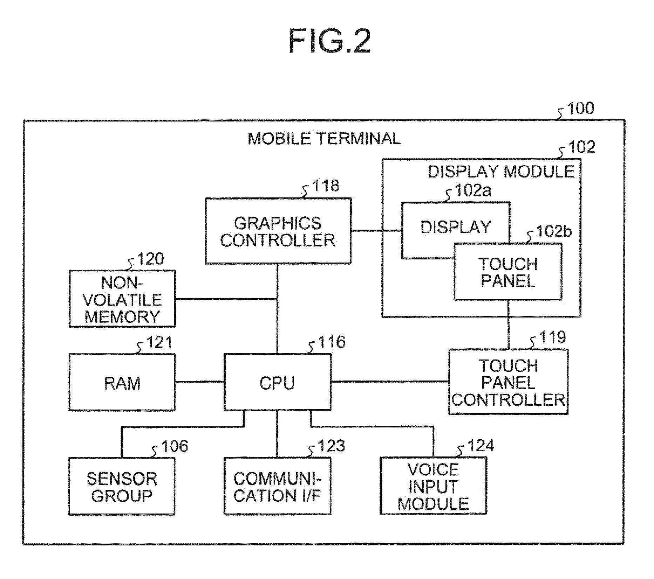

As illustrated in FIG. 2, the mobile terminal 100 comprises a display module 102, a central processing unit (CPU) 116, a graphics controller 118, a touch panel controller 119, a nonvolatile memory 120, a random access memory (RAM) 121, a communication I/F 123, a sensor group 106, and a voice input module 124. In addition, the mobile terminal 100 may comprise a camera and a speaker.

The voice input module 124 is a voice input device such as a microphone and vocally inputs utterances from a user. In the first embodiment, the voice input module 124 receives an input sentence of natural language through voice of the user, for performing operation on the digital television 200.

The display module 102 is configured as a touch screen that is a combination of a display 102a and a touch panel 102b. For example, the display 102a may be a liquid crystal display (LCD), an organic electro luminescence (EL) display, or the like. The touch panel 102b detects a position (touch position) on a display screen of the display 102a touched by a finger of a user, a stylus pen, or the like.

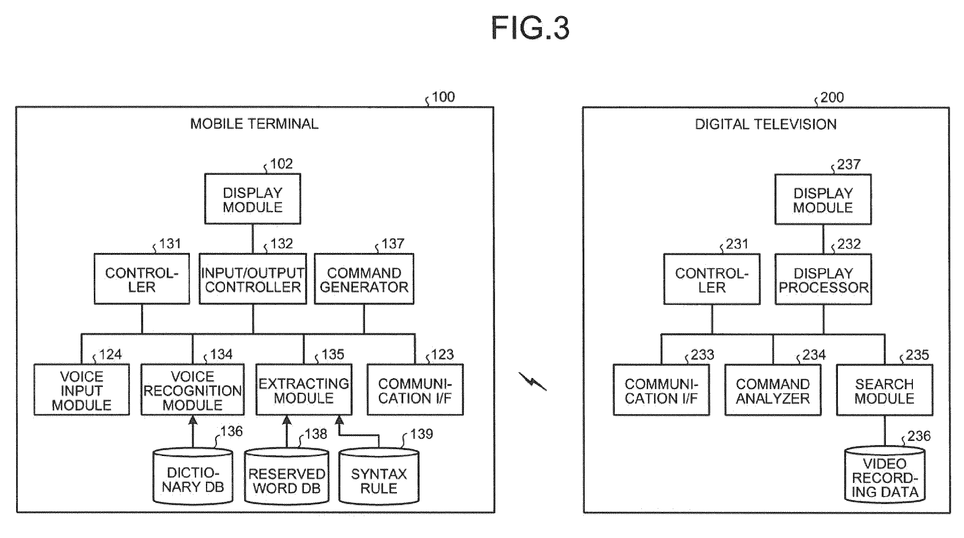

The nonvolatile memory 120 stores therein an operation system, various application programs, various pieces of data required for executing a program, and the like. The CPU 116 is a processor that controls operation of the mobile terminal 100 and controls each component of the mobile terminal 100. The CPU 116 executes the operating system and the various application programs comprising a command generating application loaded on the RAM 121 from the nonvolatile memory 120 to implement each functional part to be described later (refer to FIG. 3). The RAM 121 provides a working area for the CPU 116 to execute the programs, as a main memory of the mobile terminal 100.

The graphics controller 118 is a display controller that controls the display 102a of the display module 102. The touch panel controller 119 controls the touch panel 102b and acquires coordinate data indicating a position touched by the user from the touch panel 102b.

The communication I/F 123 performs wireless communication with an external device such as the digital television 200 and communication via a network such as the Internet, under the control by the CPU 116.

The sensor group 106 comprises an acceleration sensor that detects the direction and magnitude of acceleration exerted on the mobile terminal 100 from the outside, an azimuth sensor that detects the azimuth of the mobile terminal 100, and a gyro sensor that detects the angular velocity (rotation angle) of the mobile terminal 100. A detection signal from each of the sensors is output to the CPU 116.

The mobile terminal 100 implements each component illustrated in FIG. 3 by cooperating with the CPU 116 and the programs (various application programs such as an operating system and a command generating application program) stored in the nonvolatile memory 120.

FIG. 3 is a block diagram illustrating functional configurations of the mobile terminal 100 and the digital television 200 in the first embodiment. As illustrated in FIG. 3, the mobile terminal 100 according to the first embodiment has a functional configuration comprising a controller 131, an input/output controller 132, a voice recognition module 134, an extracting module 135, a command generator 137, a dictionary database 136, a reserved word database 138, and a syntax rule 139.

FIG. 3 also illustrates the voice input module 124, the communication I/F 123, and the display module 102 described above. The dictionary database 136, the reserved word database 138, and the syntax rule 139 are stored in a storage medium such as a hard disk drive (HDD) or a memory.

The dictionary database 136 (hereinafter, referred to as a "dictionary DB 136") is a database to which various words are registered and is referred to when the voice recognition module 134 performs voice recognition processing. In addition to the dictionary DB 136 provided to the mobile terminal 100, the dictionary DB may be provided on the server 300 to perform voice recognition processing on the server 300 side.

The controller 131 controls the entirety of the mobile terminal 100. The voice recognition module 134 performs the voice recognition processing or a morphological analysis, using the dictionary DB 136, on voice data of the input sentence of natural language that is vocally input through the voice input module 124, and outputs character strings of the input sentence as a result of voice recognition.

The extracting module 135 extracts a search-enabled character string that is a character string valid in searching for each search key type, from character strings such as morphemes constituting the character strings of the input sentence output from the voice recognition module 134, on the basis of reserved words registered to the reserved word database 138 (hereinafter, referred to as a "reserved word DB 138". The reserved word DB 138 is a database to which the reserved words are registered being classified based on search key type. The search-enabled character string is an example of a first character string. Among the character strings of the input sentence, one or more characters other than the search-enabled character string are an example of a second character.

The search key type means the type of a search key, including "location (target)", "date", "genre", "keyword", and "command". The reserved words are registered to the reserved word DB 138 for each of the search key types "location (target) ", "date", "genre", "command", and the like.

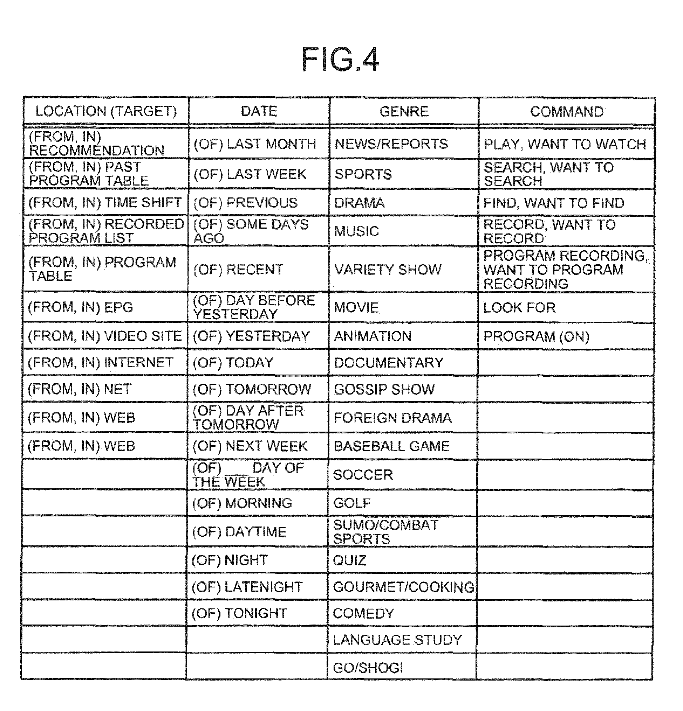

FIG. 4 is a diagram illustrating an example of the reserved word DB in the first embodiment. The search key type "location" means a location to be searched. Searching is performed for each location. Searchable locations include "recommendation", "past program table", "recorded program list", "electronic program guide (EPG)", "video site", "net" and "Internet", and terms synonymous with them are registered to the search key type "location" in the reserved word DB 138 as reserved words.

The "past program table" is a program table of video recording data stored by periodically recording all the channels. The reserved word "time shift" illustrated in FIG. 4 is synonymous with "past program table". The "EPG" is a list of programs to be broadcasted that is acquired by being downloaded from a program server and the like. The "recommendation" means to acquire and display program, in the past program table with a desired condition designated by a user. Such a program reproducing style is referred to as "recommendation play".

The "recorded program list" is a list of programs recorded through programmed recording of a desired program and the like by a user without using a function for periodically recording all the channels. The reserved word "net" is synonymous with the Internet.

If there is a character string matching a reserved word of the search key type "location" in the character strings constituting the input sentence output from the voice recognition module 134, the extracting module 135 extracts the character string as a search-enabled character string of "location".

The search key type "date" indicates the date and time of a broadcasted program that is recorded, including not only its exact date but also reserved words such as yesterday, last week, and the like as the search key type of "date". If there is a character string matching a reserved word of the search key type "date" in the character strings constituting the input sentence output from the voice recognition module 134, the extracting module 135 extracts the character string as a search-enabled character string of "date". More specifically, if there is a reserved word of "date" with a preposition in the input sentence, the extracting module 135 determines that the word after the preposition as a reserved word of "date" and extracts the word. For example, if the input sentence vocally input is "XX of yesterday", "XX of tomorrow", "XX of last week", or the like, the extracting module 135 extracts"yesterday", "tomorrow", and "last week" as reserved words of the search key type "date" from the reserved word DB 138, and set them as search-enabled character strings.

If a location to be searched is "recommendation", the extracting module 135 does not extract a search-enabled character string of the search key type "date" because the specification of the digital television 200 does not support searching by date in the recommendation play. If the date is vocally input, the input/output controller 132 displays a message that searching by date is not supported.

The search key type "genre" indicates a type of the broadcasted program, including news, a drama, and the like. If there is a character string matching a reserved word of the search key type "genre" in the character strings constituting the input sentence output from the voice recognition module 134, the extracting module 135 extracts the character string as a search-enabled character string of "genre".

In the first embodiment, the genre is classified into main genres and subgenres. Examples of the main genre include news reports, sports, drama, music, variety show, movie, animation, documentary, and gossip show. Examples of the subgenre include foreign drama, baseball, soccer, golf, sumo/combat sports, quiz, gourmet/cooking, comedy, language study, and go/shogi.

The search key type "command" includes the reserved words such as "find" that means searching and "want to watch" that means viewing, which are verbs, as the search key type "command". If there is a character string matching a reserved word of the search key type "command" in the character strings constituting the input sentence output from the voice recognition module 134, the extracting module 135 extracts the character string as a search-enabled character string of "command".

The search key type "keyword" is a search key type other than "location", "date", "genre", and "command", and is a search key type of a search-enabled character string. The search key type "keyword" includes a specific program name and the name of a performer. The extracting module 135 removes reserved words and excluded words from the input sentence vocally input, and determines and extracts the remaining character string as a search-enabled character string of the search key type "keyword". Accordingly, program names and detailed program information held by the digital television 200 are searched, and any partial match is listed in a search result.

Specifically, the extracting module 135 compares each of the character strings constituting the input sentence output from the voice recognition module 134 with the reserved words of each search key type other than "keyword" registered to the reserved word DB 138. The extracting module 135 determines a character string matching any of the reserved words as a search-enabled character string and determines the search key type of the matched reserved word as the search key type of the search-enabled character string. Then, among the character strings constituting the input sentence, the extracting module 135 determines a character string that is valid in searching and not included in reserved words as a search-enabled character string of the search key type "keyword".

The extracting module 135 may be configured such that the reserved words of "keyword" are registered to the reserved word DB 138 in advance and when there is a character string matching any of the reserved words of the search key type "keyword" in the character strings constituting the input sentence output from the voice recognition module 134, the extracting module 135 extracts the character string as the search-enabled character string of "keyword".

The search key type is not limited to those listed above but may include "new program" for example. If there is a character string of the search key type "new program" in the input sentence, the digital television 200 may be configured to search for a program having the attribute "new program".

The extracting module 135 determines, for each search-enabled character string that is determined, a word related to the search-enabled character string. In the first embodiment, with regard to the search-enabled character string of the search key type other than "keyword" among the search-enabled character strings that are determined, the extracting module 135 extracts a reserved word related to the search-enabled character string from the reserved word DB 138. Specifically, the extracting module 135 extracts all the reserved words of the search key type corresponding to the search-enabled character string from the reserved word DB for each search-enabled character string that is determined, and determines the extracted words as candidate words.

For a search-enabled character string of the search key type "keyword" among search-enabled character strings that are determined, the extracting module 135 determines a word given as a candidate through voice recognition of the search-enabled character string as a candidate word. Herein, the candidate word is a word for correcting the search-enabled character string.

The extracting module 135 refers not only to the reserved word DB 138 but also to the syntax rule 139 and extracts a search-enabled character string from the input sentence. The syntax rule 139 is a rule of combination of the search key types for generating a search command from the input sentence, including not only a list of all the search key types "location (target), date, genre, keyword, command" but also a list of their combination.

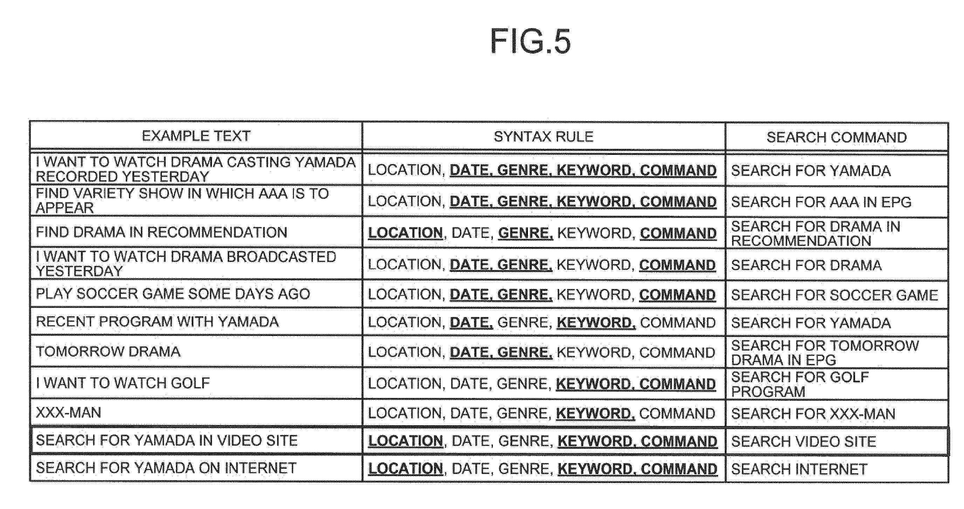

FIG. 5 is a diagram illustrating an example of generating a search command from the input sentence using the syntax rule in the first embodiment. The syntax rule is indicated by a combination of the search key types highlighted in a column of "syntax rule" illustrated in FIG. 5.

The input/output controller 132 controls input/output to/from the display module 102. Specifically, the input/output controller 132 performs display control on the display 102a of the display module 102 via the graphics controller 118 and controls an input through a touch operation from the touch panel 102b of the display module 102 via the touch panel controller 119.

The input/output controller 132 displays, on the display 102a of the display module 102, the character string corresponding to voice of the user in a state in which a search-enabled character string extracted by the extracting module 135 is displayed in a format different from that of characters other than the search-enabled character string in the voice-recognized input sentence and the search-enabled character string can be corrected. Specifically, the input/output controller 132 highlights the search-enabled character string in the character strings of the input sentence in a character color such as red and the like or in a bold font and the like. The input/output controller 132 displays the search-enabled character string on the display 102a.

The input/output controller 132 displays a list of candidate words including one or more candidate words extracted by the extracting module 135 selectable on the display 102a for each search-enabled character string. If the search-enabled character string displayed on the display 102a is incorrect and there is a correct search-enabled character string in the list of candidate words, the user can select a candidate word as the correct search-enabled character string by performing a touch operation via the touch panel 102b. In this case, the input/output controller 132 replaces the incorrect search-enabled character string with the selected candidate word and displays the word on the display 102a.

The command generator 137 generates a search command including one or more search-enabled character strings extracted by the extracting module 135. The communication I/F 123 transmits the search command generated by the command generator 137 to the digital television 200.

When the user selects a candidate word by touch operation on the touch panel 102b of the display module 102, the command generator 137 replaces the displayed search-enabled character string of the search key type of the selected candidate word with the search-enabled character string of the selected candidate word, and generates a search command.

The command generator 137 performs determination for the search key type "location" in the following order of priority to generate a search command.

### First priority

When a location is explicitly designated in the input sentence vocally input by the user (for example, "play XX in the recorded program list"), the command generator 137 generates a search command including the location designated in the input sentence and causes the digital television 200 to search the designated location.

### Second priority

When a date after the day in question is designated in the input sentence or it is determined that the searching is for program recording reservation, the command generator 137 generates a search command including the EPG and causes the digital television 200 to search the EPG.

### Third priority

The command generator 137 determines the current status of the digital television 200 based on an operation content until then or acquires the current status from the digital television 200 via the communication I/F 123, to generate a search command as described below according to the current status.

When the digital television 200 is in the current status of displaying a screen of recommendation play (including a screen of a search result), the command generator 137 generates a search command including "recommendation" and causes the digital television 200 to search a past program table and display a search result in the format of the recommendation play.

When the digital television 200 is in the current status of displaying a screen of a past program table (including a screen of a search result), the command generator 137 generates a search command including "past program table" and causes the digital television 200 to search the past program table and display a search result in the format of the past program table.

When the digital television 200 is in the current status of displaying a screen of a recorded program list (including a screen of a search result), the command generator 137 generates a search command including "recorded program list" and causes the digital television 200 to search the recorded program list.

When the digital television 200 is in the current status of displaying a screen of an EPG (including a screen of a search result), the command generator 137 generates a search command including "EPG" and causes the digital television 200 to search the EPG.

When the digital television 200 is in the current status of displaying a screen of a video site, the command generator 137 generates a search command including "video site" and causes the digital television 200 to search the video site.

When the digital television 200 is in the current status of displaying a screen of an arbitrary site on the Internet, the command generator 137 generates a search command including "Internet" and causes the digital television 200 to search through a search site on the Internet.

When the digital television 200 is in the current status of displaying a reproducing screen of a past program, the command generator 137 generates a search command including "past program table" and causes the digital television 200 to search the past program table and display a search result in the format of the past program table.

When the digital television 200 is in the current status of displaying a reproducing screen of a program in a recorded program list, the command generator 137 generates a search command including "recorded program list" and causes the digital television 200 to search the recorded program list.

### Fourth priority

When the digital television 200 is in the current status other than those described above, the command generator 137 generates a search command including "recommendation" that is the default location, and causes the digital television 200 to search the past program table and display a search result in the format of the recommendation play.

Except for the case in which a location is explicitly designated as in the first priority, a location to be searched as determined in the order of priority described above may not follow an intention of the user. For this reason, the input/output controller 132 may be configured such that, at the time of generating a search command, the search command and other reserved words as candidate words indicating locations are displayed selectable through touch operation on the display 102a.

Returning to FIG. 3, the configuration of the digital television will be described. As illustrated in FIG. 3, the digital television 200 mainly comprises a controller 231, a display module 237, a display processor 232, a communication I/F 233, a command analyzer 234, a search module 235, and a video recording data 236.

The controller 231 controls the entirety of the digital television 200. The controller 231 implements a video recording and reproducing function. The display module 237 is a display device such as a display apparatus. The display processor 232 performs display control on the display module 237. The communication I/F 233 controls communication with the mobile terminal 100, the server 300, and the broadcasting station server 400 on the Iriternet. The command analyzer 234 analyzes a search command received from the mobile terminal 100 via the communication I/F 233. The search module 235 searches contents indicated by the search command on the basis of the analysis result of the search command by the command analyzer 234. The video recording data 236 is stored in a storage medium such as an HDD.

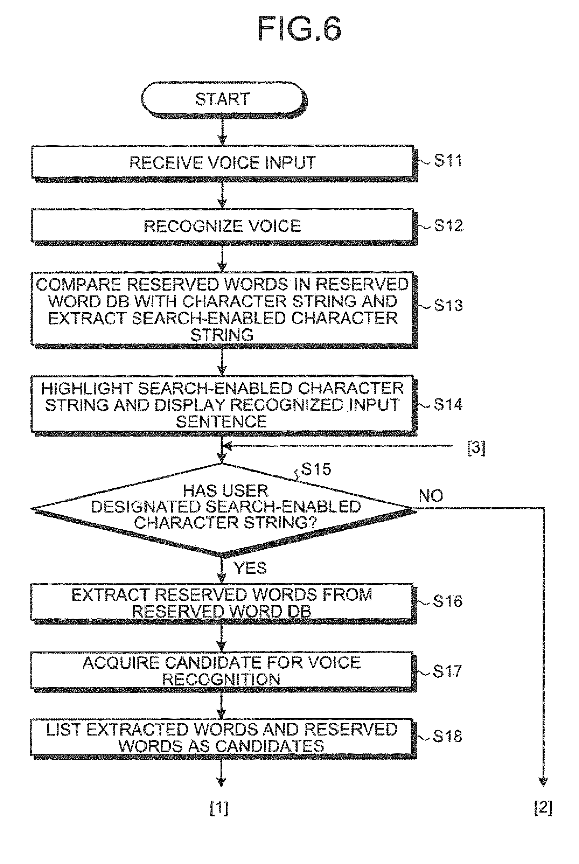

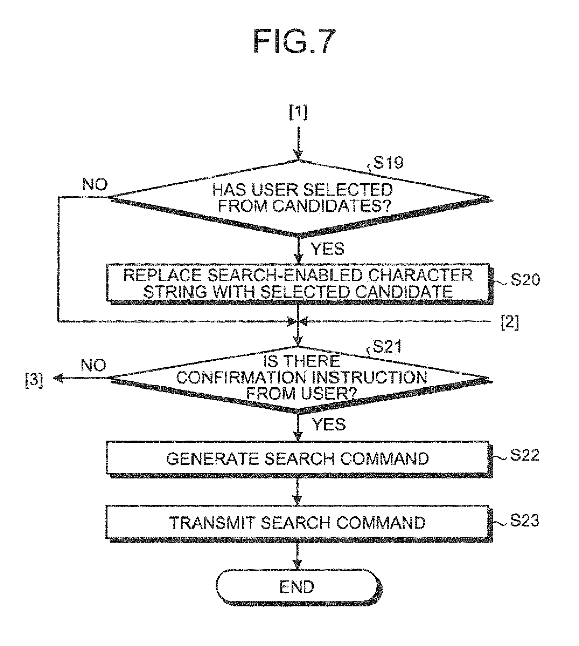

The following describes a command generating process by the mobile terminal 100 in the first embodiment that is configured as described above. FIGS. 6 and 7 are flowcharts illustrating the procedure of the command generating process in the first embodiment.

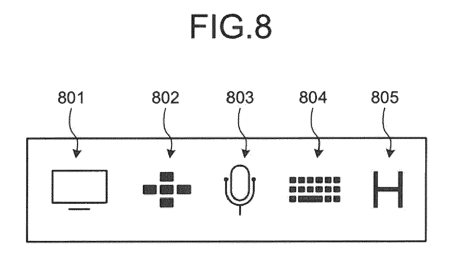

The input/output controller 132 of the mobile terminal 100 displays a menu bar at a lower part of a screen displayed on the display 102a. FIG. 8 is a diagram illustrating an example of the menu bar in the first embodiment. On the menu bar, five keys (buttons) are displayed. A key denoted by a reference numeral 801 is a key for activating the present program table that is a list of programs currently being broadcasted. A key denoted by a reference numeral 802 is a key for activating a remote controller detail screen. A key denoted by a reference numeral 803 is a key for activating a voice input screen. A reference numeral 804 denotes a key for activating a text input screen. A key denoted by a reference numeral 805 is a key for activating a function working with Hybridcast (registered trademark).

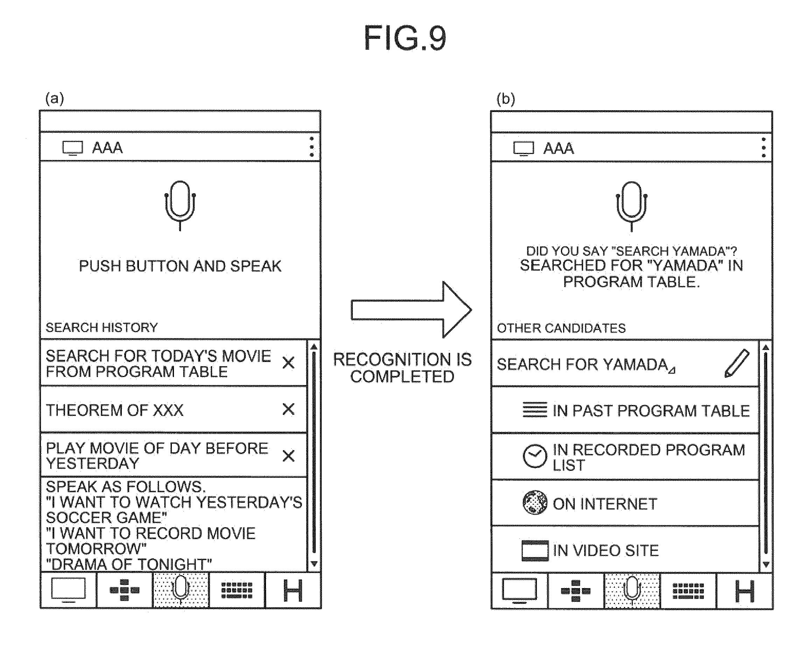

When the user pushes down the key denoted by the reference numeral 803 illustrated in FIG. 8, the input/output controller 132 receives the key push and displays the voice input screen illustrated in FIG. 9(a) on the display 102a, so that processing in the flowcharts in FIGS. 6 and 7 is performed. If the user vocally inputs an instruction to the digital television 200 in natural language on the voice input screen illustrated in FIG. 9(a), the voice input module 124 receives the voice input (S11).

Next, the voice recognition module 134 performs voice recognition processing on the input sentence vocally input by the voice input module 124 (S12) and outputs the character strings of the input sentence. The input/output controller 132 displays the recognition result on the display 102a as illustrated in FIG. 9(b). Then the extracting module 135 compares reserved words for each search key type registered to the reserved word DB 138 with the character string of each morpheme constituting the input sentence, and extracts a character string matching any of the reserved words as a search-enabled character string (S13).

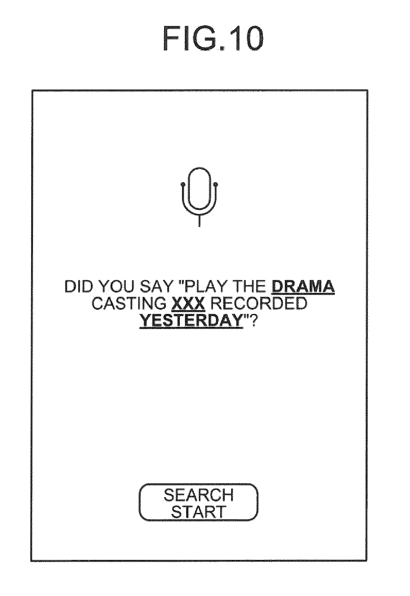

Next, the input/output controller 132 displays the input sentence in which all the search-enabled character strings extracted at S13 are highlighted on the display 102a of the display module 102 (S14). FIG. 10 is a diagram illustrating an example of a display screen of the input sentence of which search-enabled character strings are highlighted in the first embodiment. In the example of FIG. 10, the search-enabled character string "yesterday" corresponds to the search key type "date", "XXX" corresponds to the search key type "keyword", "drama" corresponds to the search key type "genre", and "play" corresponds to the search key type "command". Each of the search-enabled character strings is highlighted.

If the user designates any search-enabled character string among the displayed search-enabled character strings on the display screen in FIG. 10 by touch operation, the input/output controller 132 receives the user designation of the search-enabled character string (Yes at S15).

When the input/output controller 132 receives the user designation of the search-enabled character string, for the search-enabled character string of a search key type other than "keyword", the extracting module 135 extracts the reserved words of the same search key type with reference to the reserved word DB 138 (S16). For a search-enabled character string of the search key type "keyword", the extracting module 135 acquires, from the voice recognition module 134, a word given as a candidate through recognition of the search-enabled character string (S17).

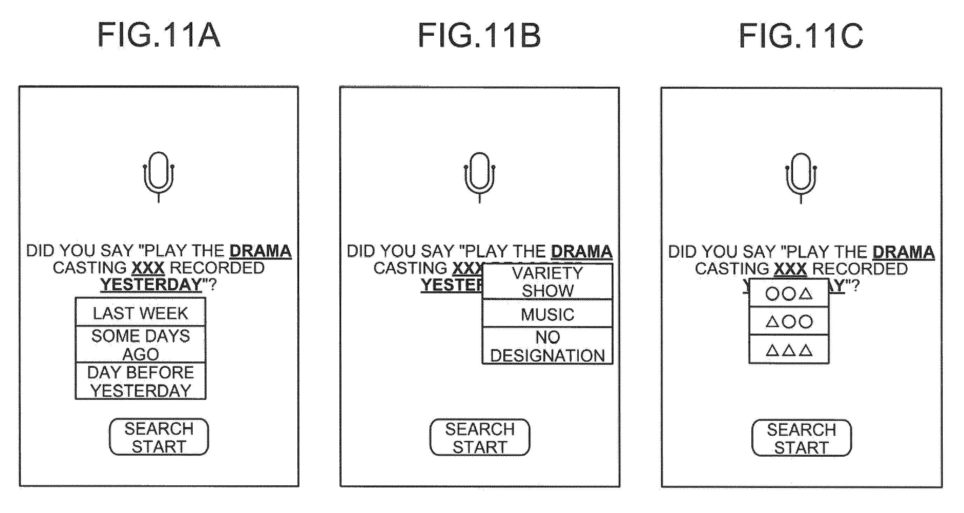

The input/output controller 132 lists, on the display 102a of the display module 102, the reserved words extracted at S16 and the word acquired at S17 near the search-enabled character string as the candidate words (S18). FIGS. 11A to 11C are diagrams illustrating examples of a screen displaying a list of candidate words in the first embodiment. FIG. 11A illustrates a display example of the list of candidate words of the search-enabled character string "yesterday" of search key type "date", FIG. 11B illustrates a display example of the list of candidate words of the search-enabled character string "drama" of the search key type "genre", and FIG. 11C illustrates a display example of the list of candidate words of the search-enabled character string "XXX" of the search key type "keyword".

If the user selects a desired candidate word from the list of candidate words on the screens of FIGS. 11A to 11C, the input/output controller 132 receives the user selection (Yes at S19) and replaces the search-enabled character string with the selected candidate word (S20).

If the user designation of a search-enabled character string is not received at S15 (No at S15), the processing of from S16 to S20 is not performed. If the user selection of a candidate word from the list of candidate words is not received at S19 (No at S19), the processing of S20 is not performed.

If the user pushes a search start button as a confirmation instruction in FIG. 10 or FIGS. 11A to 11C, the input/output controller 132 receives the user instruction of "search start" (Yes at S21), and the command generator 137 generates a search command including a search-enabled character string (S22). Then the communication I/F 123 transmits the generated search command to the digital television 200 (S23). If the confirmation instruction is not received from the user at S21 (No at S21), the process returns to S15.

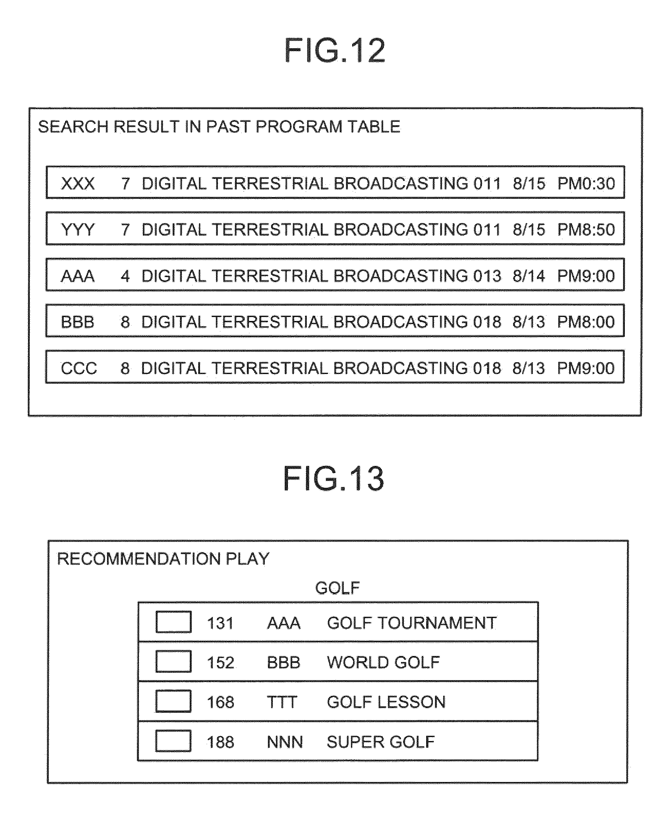

In the digital television 200, the communication I/F 233 receives the search command, the command analyzer 234 analyzes the search command, the search module 235 performs searching on the basis of the search command, and the display processor 232 displays the search result on the display module 237. FIG. 12 is a diagram illustrating a display example of the search result with a search command generated by selecting "past program table" as the search key type "location". FIG. 13 is a diagram illustrating a display example of the search result with a search command generated by selecting "recommendation" as the search key type "location".

As described above, in the first embodiment, a search-enabled character string valid in searching is highlighted in the input sentence vocally input, and may be changed to another candidate word. Therefore, even when a search key is difficult to be recognized because of a manner of speaking of the user or when the user erroneously speaks by mistake, a search-enabled character string is highlighted to allow the user to correct any error. Accordingly, the first embodiment achieves searching by voice input that is convenient for the user.

### Second embodiment

In a second embodiment, the mobile terminal 100 displays the number of the candidate words when highlighting a search-enabled character string. The hardware configuration and the functional configuration of the mobile terminal 100 and the functional configuration of the digital television 200 according to the second embodiment are the same as those in the first embodiment.

The extracting module 135 of the mobile terminal 100 according to the second embodiment has the same function as that in the first embodiment and counts the number of words related to each search-enabled character string as the number of candidates. Specifically, for a search-enabled character string of a search key type other than "keyword", the extracting module 135 counts the number of reserved words, except the search-enabled character string, registered to the search key type of the search-enabled character string in the reserved word DB 138, as the number of words related to the search-enabled character string (the number of candidates) . For a search-enabled character string of the search key type "keyword", the extracting module 135 acquires and counts the number of candidates when the voice recognition module 134 recognizes the search-enabled character string.

The input/output controller 132 of the mobile terminal 100 according to the second embodiment has the same function as that in the first embodiment and displays the number of candidates counted by the extracting module 135 near the search-enabled character string.

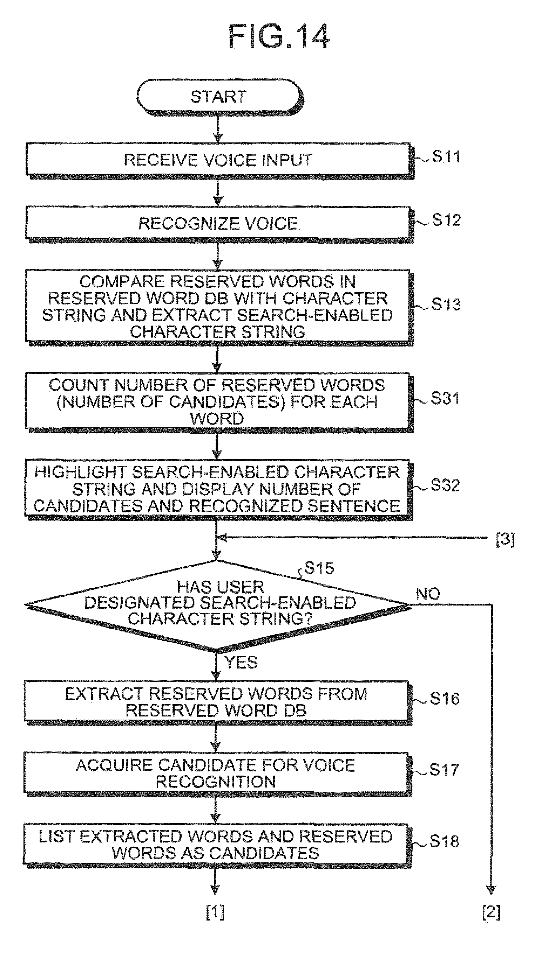

The following describes a command generating process by the mobile terminal 100 in the second embodiment that is configured as described above. FIG. 14 is a flowchart illustrating the procedure of the command generating process according to the second embodiment.

The processing from the reception of the voice input by the user to the extraction of a search-enabled character string (S11 to S13) is performed in a similar manner as that in the first embodiment. If the search-enabled character string is extracted, the extracting module 135 counts the number of words related to the search-enabled character string as the number of candidates as described above for each search-enabled character string (S31).

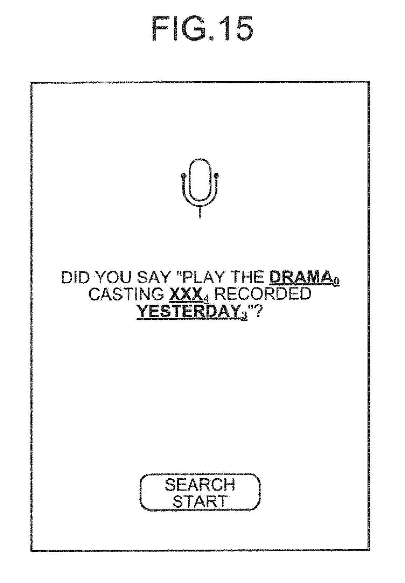

The input/output controller 132 displays the number of candidates counted by the extracting module 135 near the search-enabled character string (S32). FIG. 15 is a diagram illustrating an example of displaying the number of candidates at the lower right of the search-enabled character string in the second embodiment. The display position of the number of candidates is not limited to the example in FIG. 15 and may be near the search-enabled character string. The subsequent processing (S15 to S23) is performed similarly to the first embodiment.

As described above, in the second embodiment, the number of the candidate words is displayed when the search-enabled character string is highlighted, so that the second embodiment achieves searching by voice input that is further convenient for the user.

### Third embodiment

In the above embodiments, when the search key type is "keyword", a character string determined as a search-enabled character string is highlighted as is. In a third embodiment, a portion causing false recognition of utterance is displayed delectable from the search-enabled character string when the search key type is "keyword".

The hardware configuration and the functional configuration of the mobile terminal 100 and the functional configuration of the digital television 200 according to the third embodiment are the same as those in the first embodiment. The extracting module 135 of the mobile terminal 100 according to the third embodiment has the same function as that in the first embodiment, and extracts a portion causing false recognition in the search-enabled character string extracted as the search key type "keyword". Specifically, the extracting module 135 determines the portion causing false recognition utilizing a morphological analysis result used in recognition by the voice recognition module 134. The portion causing false recognition means a portion of the utterance that is not necessary for searching, such as "Er" or "Oh" included in the utterance.

The input/output controller 132 displays the portion causing false recognition in the search-enabled character string extracted as the search key type "keyword" delectable from the search-enabled character string by user's touch operation and the like on the display 102a.

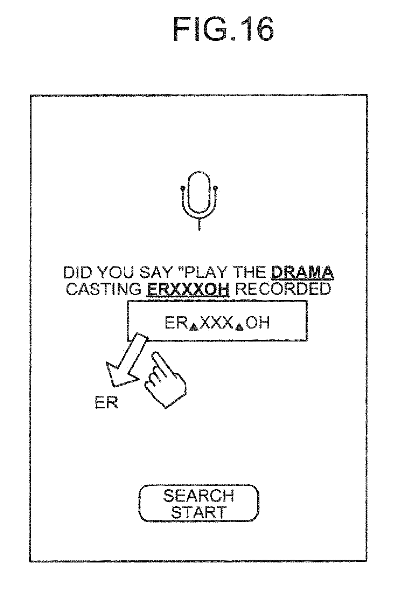

FIG. 16 is a diagram illustrating an example of displaying the search-enabled character string from which a portion causing false recognition can be deleted according to the third embodiment. In the example illustrated in FIG. 16, utterances of "Er" and "Oh" are portions causing false recognition among the highlighted search-enabled character strings. The user traces such portions by touch operation, so that the input/output controller 132 receives the touch operation and removes the portions causing false recognition from the search-enabled character string to change the display of the display 102a. Accordingly, the command generator 137 generates a search command including the search-enabled character string from which the portions causing false recognition are removed.

As described above, in the third embodiment, the portions causing false recognition of utterance is displayed deletable in the search-enabled character string when the search key type is "keyword". Therefore, a search command from which a portion causing false recognition in voice recognition is removed is transmitted to the digital television 200, so that more accurate searching may be achieved.

### Modification

In the above embodiments, the mobile terminal 100 performs voice recognition processing on the input sentence vocally input. However, the embodiments are not limited thereto. For example, the configuration may be such that the input sentence vocally input by the mobile terminal 100 is transmitted to an external server or the like, the external server performs voice recognition processing, the mobile terminal 100 receives any character string of the input sentence obtained as the voice recognition result from the external server, and a search-enabled character string is extracted.

The above embodiments describe the mobile terminal 100 as an example. However, the embodiments are not limited thereto. For example, the configuration may be such that voice is input to a remote controller. In this case, the configuration is such that the input voice is transmitted to the digital television 200 from the remote controller, and the digital television 200 determines and highlights any search-enabled character string.

Also in the above embodiments, a search-enabled character string is highlighted. However, the embodiments are not limited thereto. Any display form may be adopted as long as the display form is different from that of the other characters or character strings in the input sentence.

The search key types in the above embodiments are exemplary only, and other search key types may be used.

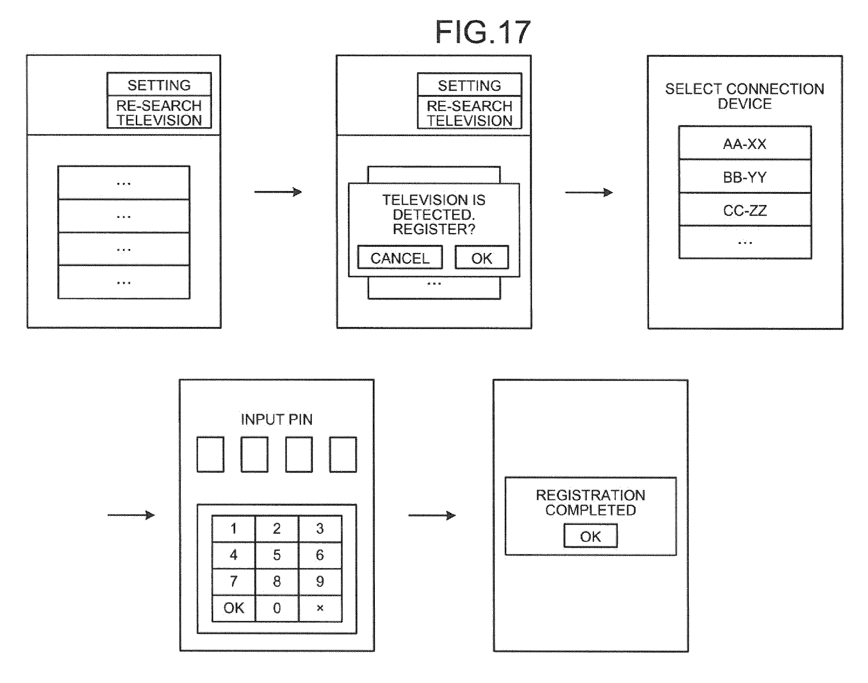

The following modification describes functions other than the functions described in the above embodiments. FIG. 17 is a diagram illustrating a transition in a screen when the digital television 200 is detected according to the modification of the embodiments. As illustrated in FIG. 17, if the communication I/F 123 detects the digital television 200 in the same network, the input/output controller 132 displays a dialog, as a pop-up screen, for starting device registration indicating whether to register the detected television.

If the user instructs registration, the input/output controller 132 lists all the target devices detected in the same network and causes the user to select a device to be registered. When the user selects the device, the input/output controller 132 displays a PIN authentication screen and causes the user to input a PIN code displayed on a screen of the digital television 200 to be connected to perform authentication. If the authentication is successful, a message indicating that the registration is completed is displayed.

The digital television 200 that is once detected will not be displayed in a pop-up in the next and succeeding detections because the device information thereof is recorded. When the user re-search for the digital television 200, the re-searching is performed by selecting "re-search television" from an option menu. If an unregistered digital television 200 is detected, the input/output controller 132 displays the dialog for starting device registration.

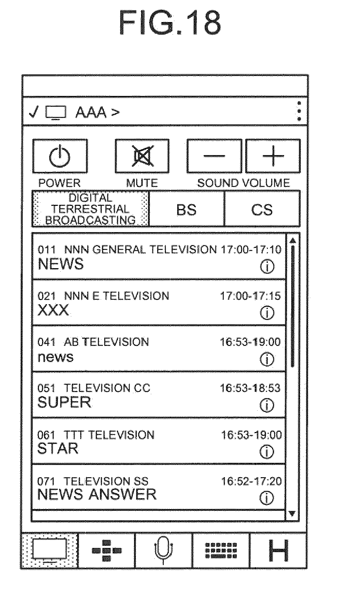

The above embodiment describes a case in which the user pushes the key denoted by the reference numeral 803 in the menu bar illustrated in FIG. 8 to input voice. The modification describes a case in which the user pushes other keys. When the user pushes the key denoted by the reference numeral 801 in the menu bar illustrated in FIG. 8, the input/output controller 132 displays a screen of the present program table illustrated in FIG. 18. The present program table represents a list of programs being broadcasted at that time.

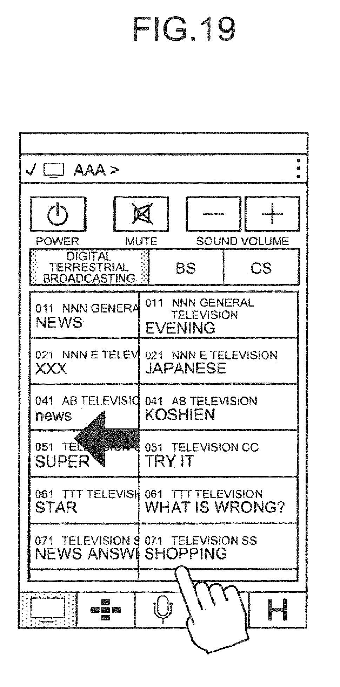

When the user performs a drag operation from the right to the left on the screen of the present program table, the input/output controller 132 displays a next program screen illustrated in FIG. 19 appearing from the right of the screen. When the user takes off his/her finger touching on the screen, the input/output controller 132 deletes the indication of the next programs by bounce back, and the screen returns to the state in FIG. 18.

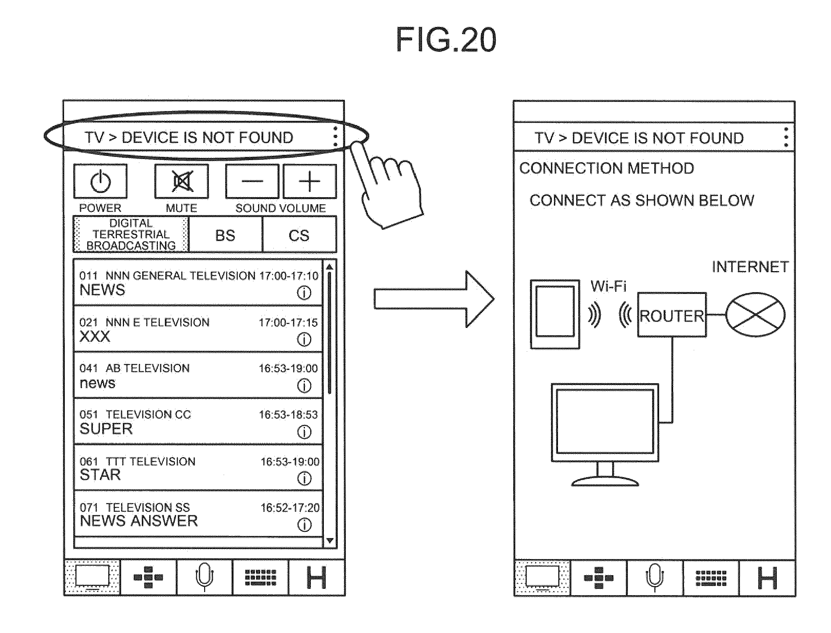

If the digital television 200 as a partner device is not registered to the mobile terminal 100 at all, a message indicating that the device is not found is displayed on an action bar at an upper part of the screen as illustrated in FIG. 20. If the user performs touch operation on the action bar, the input/output controller 132 displays a screen indicating guidance of a connection method.

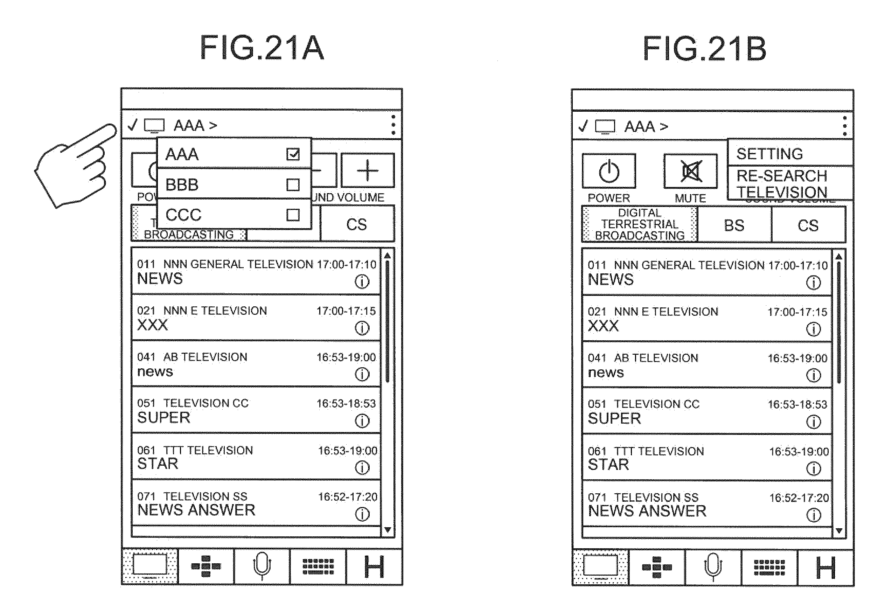

If the digital television 200 has already been registered to the mobile terminal 100, when the user taps the action bar, the input/output controller 132 displays a registered device list as a pull-down menu and the connection device may be changed, as illustrated in FIG. 21A. As illustrated in FIG. 21B, a re-search menu for re-scanning connection devices is also displayed.

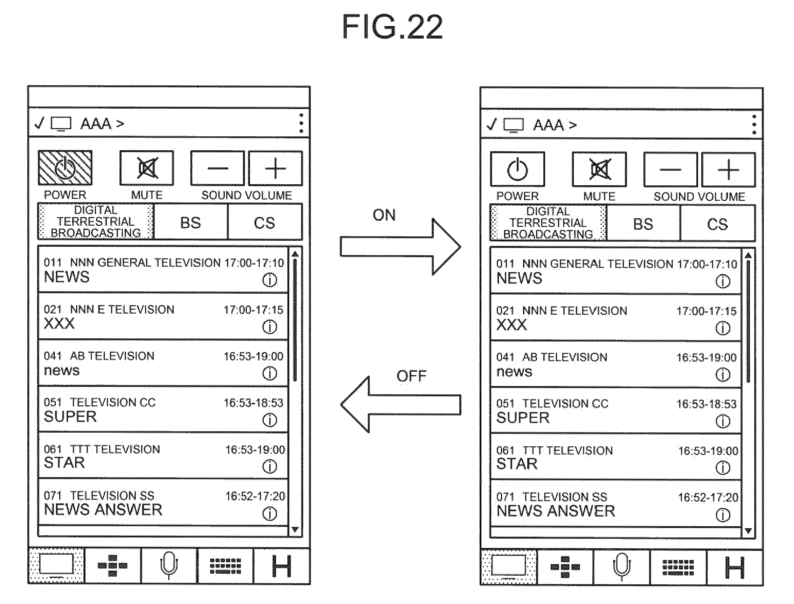

As illustrated in FIG. 22, the power supply of the connected digital television 200 can be turned on and off by the mobile terminal 100 by pressing a power supply key displayed on the upper left of the screen of the present program table.

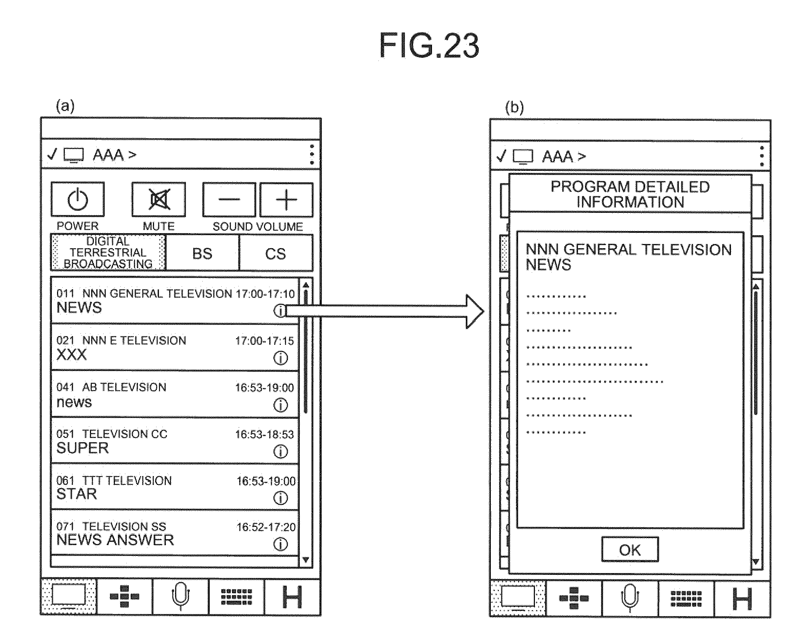

As illustrated in FIG. 23, if the user taps an icon on the right of a program in the present program table, the input/output controller 132 may display a screen of detailed information of the tapped program.

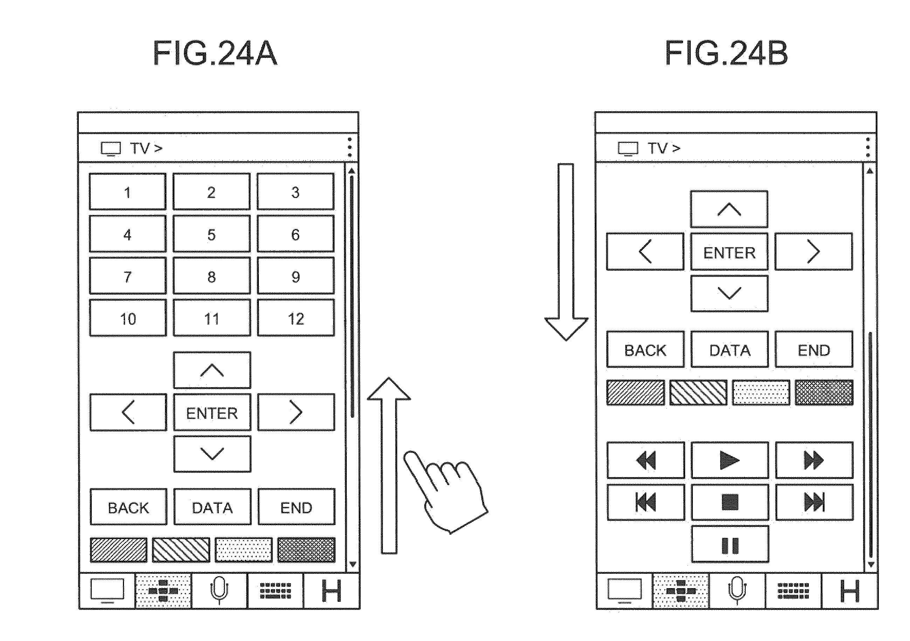

When the user pushes the key denoted by the reference numeral 802 in the menu bar illustrated in FIG. 8, the input/output controller 132 displays the remote controller detail screen illustrated in FIG. 24A. The remote controller detail screen has a 2-screen configuration, so that the screen can be switched as illustrated in FIGS. 24A and 24B when the user performs swipe operation vertically.

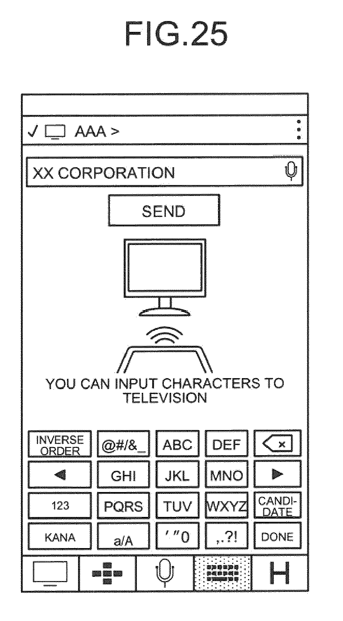

When the user pushes the key denoted by the reference numeral 804 in the menu bar illustrated in FIG. 8, the input/output controller 132 displays an text input screen illustrated in FIG. 25. In the text input screen, the user inputs text by key operation to display the text, and a content vocally input by the user is subjected to voice recognition by the voice recognition module 134 and displayed as text.

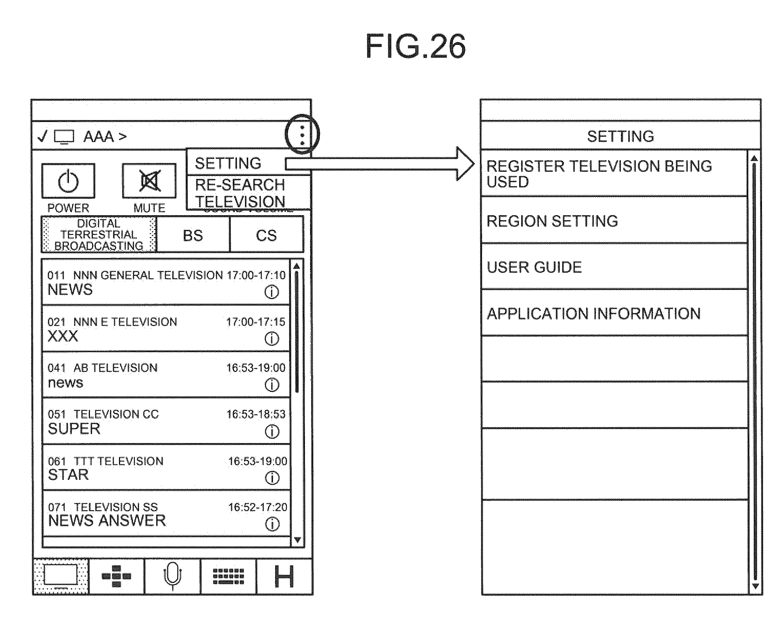

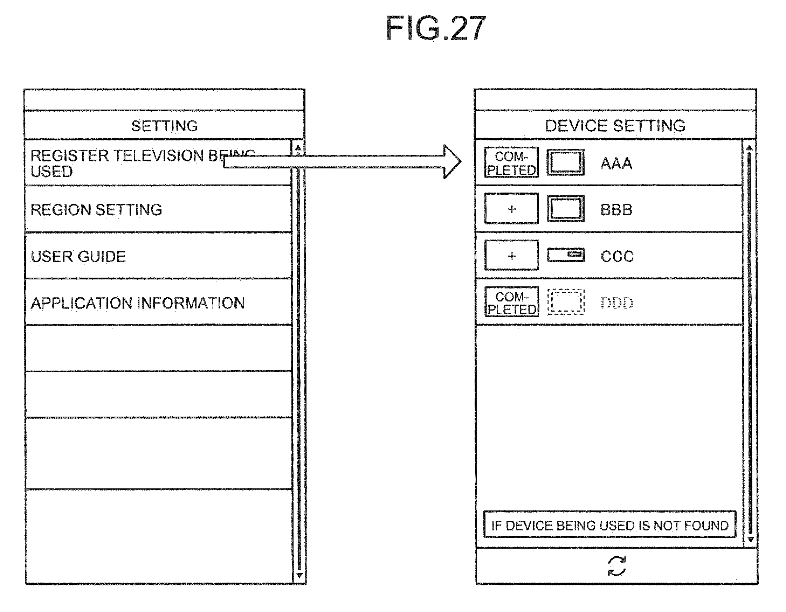

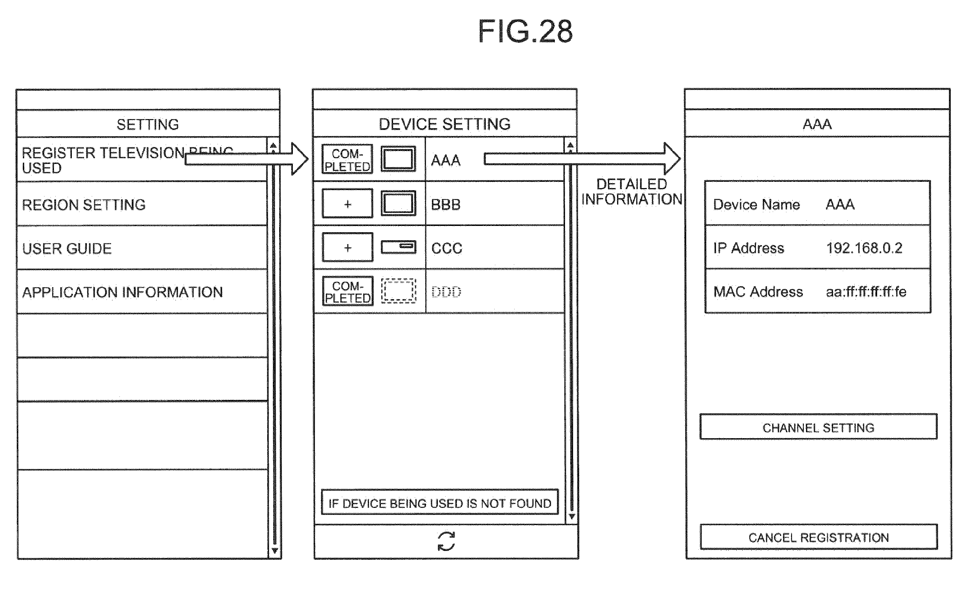

The following describes various settings in the mobile terminal 100. As illustrated in FIG. 26, when the user pushes setting in a pull-down menu at the upper right of the screen of the present program table, the input/output controller 132 displays a setting screen. When the user touches "register television being used" on the setting screen, the input/output controller 132 displays a device list screen illustrated in FIG. 27. When the user selects a desired device (digital television 200) by touch operation on the device list screen, the input/output controller 132 displays detailed information of the selected device as illustrated in FIG. 28.

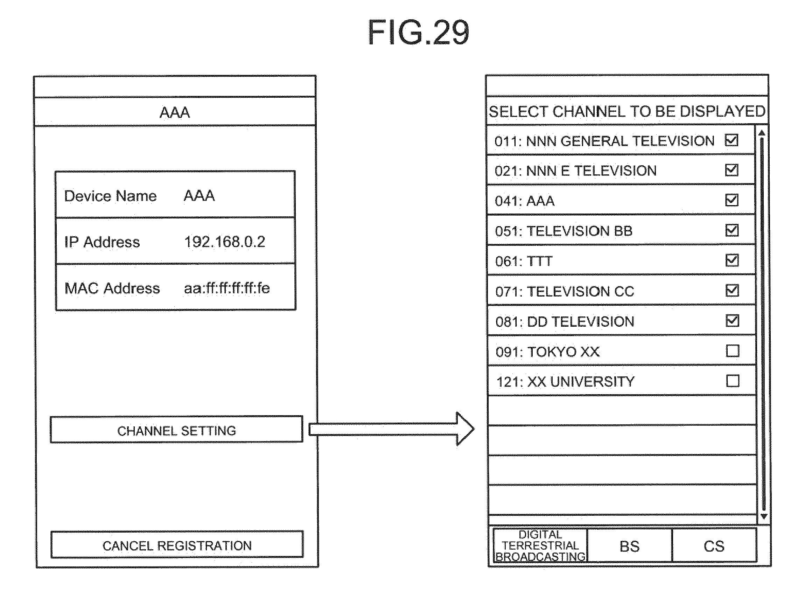

When the user taps "channel setting" on the detailed information screen of the device, the input/output controller 132 displays a channel display setting screen as illustrated in FIG. 29. In the channel display setting screen, channels displayed on the screen of the program table may be set for each partner device.

The input/output controller 132 acquires channel information of the digital television 200 and displays a channel setting screen. If the channel setting has been already completed, information set in the setting screen takes priority over a channel skip setting of the digital television 200. When there are some broadcast waves that cannot be acquired, the corresponding buttons (digital terrestrial broadcasting/BS/CS) are not displayed.

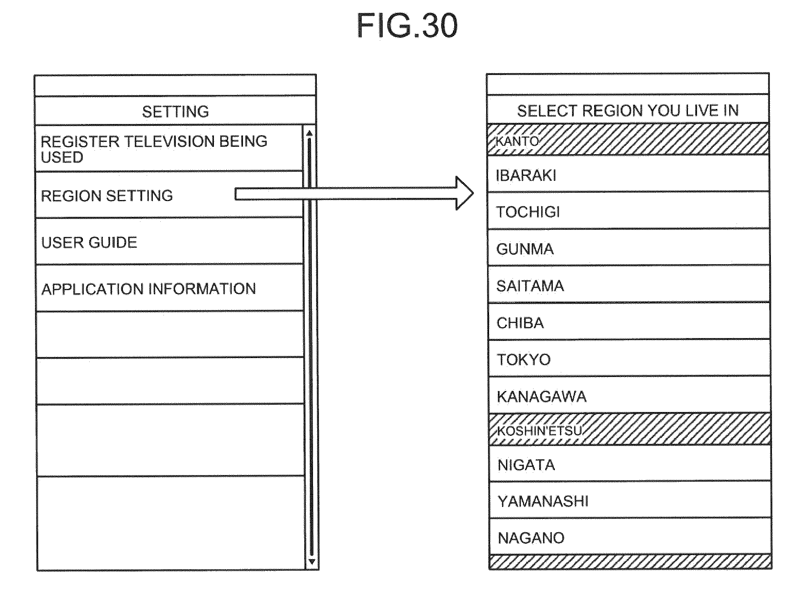

When the user selects "region setting" by touch operation on the setting screen, the input/output controller 132 displays a region selection screen as illustrated in FIG. 30, so that the user can select a region on the region setting screen.

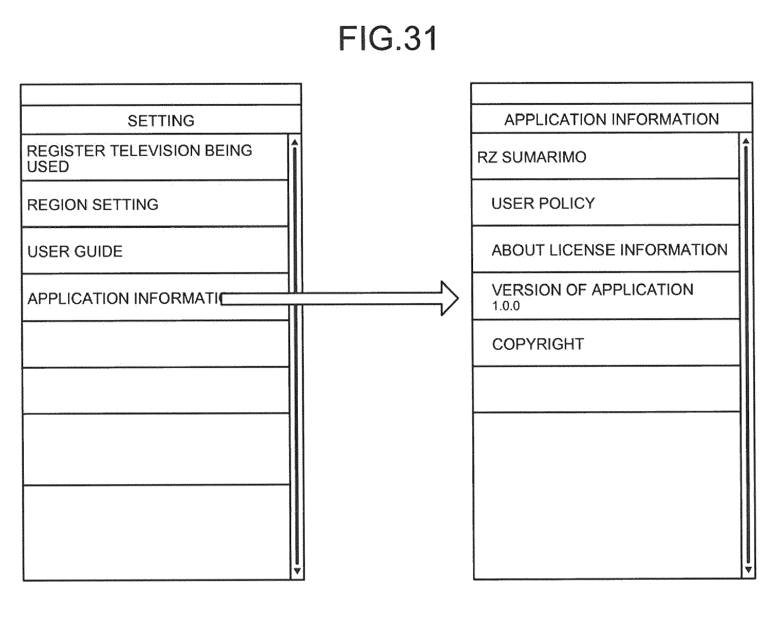

When the user selects "application information" by touch operation on the setting screen, the input/output controller 132 displays an application information screen as illustrated in FIG. 31, so that the user can obtain the application information on the application information screen.

A command generation program executed by the mobile terminal 100 in the embodiments is stored on a computer connected to a network such as the Internet and provided as a computer program product by being downloaded via the network.

The command generation program executed by the mobile terminal 100 in the embodiments may be provided as an installable or executable file being recorded on a computer-readable recording medium such as a CD-ROM, a flexible disk (FD), a CD-R, a digital versatile disk (DVD).

The command generation program executed by the mobile terminal 100 in the embodiments may be provided as a computer program product being incorporated in a ROM and the like in advance.

The command generation program executed by the mobile terminal 100 in the embodiments may be configured to be provided or distributed as a computer program product via a network such as the Internet.

The command generation program executed by the mobile terminal 100 in the embodiments has a module configuration including the modules described above (the input/output controller 132, the command generator 137, the voice recognition module 134, and the extracting module 135). As actual hardware, the modules are loaded on a RAM when a CPU reads out and executes the command generation program from the ROM, and the input/output controller 132, the command generator 137, the voice recognition module 134, and the extracting module 135 are generated on the RAM.

The various modules of the system described herein may be implemented as a software application, a hardware and/or software module, or a component on one or more computers such as a server. Although the various modules are individually described, they may share some or all of the same fundamental logic or codes.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A method comprising:
receiving a sentence corresponding to a voice of a user for operating an electronic device (200), the sentence including a first character string and one or more second character strings, the first character string corresponding to a reserved word used in searching information by the electronic device (200);
displaying the first character string in a first format and the one or more second character strings in a second format different from the first format, the first character string correctable by a user operation, the user operation to be input by using a display area of the first character string;
generating a search command comprising the first character string; and
transmitting the search command to the electronic device (200).

2. The method of Claim 1, further comprising:
displaying a word related to the first character string selectable as a candidate word for correcting the first character string; and
after selection of any candidate word, generating a search command by replacing the first character string with the selected candidate word.

3. The method of Claim 2, further comprising:
displaying number of words related to the first character string near an display area of the first character string.

4. The method of Claim 1, further comprising:
displaying a third character string in the first format together with the first character string and the one or more second character strings,
wherein the sentence further includes the third character string which does not correspond to a reserved word but valid in searching information by the electronic device (200), and the third character string correctable by a user operation.

5. At device (100) comprising:
an input controller (124) configured to receive a sentence corresponding to a voice of a user for operating an external device (200), the sentence including a first character string and one or more second character strings, the first character string corresponding to a reserved word used in searching information by the external device (200);
a display (102) configured to display the first character string in a first format and the one or more second character strings in a second format different from the first format, the first character string correctable by a user operation, the user operation to be input by using a display area of the first character string;
a generator (137) configured to generate a search command comprising the first character string; and
a transmission module (123) configured to transmit the search command to the external device (200).

6. The electronic device (100) of Claim 5, further comprising:
storage configured to store therein dictionary information (138) to which the reserved word is registered; and
an extracting controller (135) configured to extract the first character string matching the reserved word registered to the dictionary information (138) from the sentence.

7. The electronic device (100) of Claim 5, wherein
the display (102) is configured to display a word related to the first character string selectable as a candidate word for correcting the first character string; and
after selection of any candidate word, the generator (137) is configured to generate a search command by replacing the first character string with the selected candidate word.

8. The electronic device (100) of Claim 7, wherein
the display (102) is configured to display number of words related to the first character string near an display area of the first character string.

9. The electronic device (100) of Claim 6, wherein
the extracting controller (135) is further configured to extract a portion causing false recognition from the first character string,
the display (102) is configured to display the portion causing false recognition, which can be deleted in the first character string; and
the generator (137) is configured to generate the search command comprising the first character string from which the portion causing false recognition is deleted.

10. The electronic device (100) of Claim 5, wherein the display (102) is further configured to display a third character string in the first format together with the first character string and the one or more second character strings,
wherein the sentence further includes the third character string which does not correspond to a reserved word but valid in searching information by the external device (200), and the third character string correctable by a user operation.

11. A computer program causing a computer to execute:
receiving a sentence corresponding to a voice of a user for operating an electronic device (200), the sentence including a first character string and one or more second character strings, the first character string corresponding to a reserved word used in searching information by the electronic device (200);
displaying the first character string in a first format and the one or more second character strings in a second format different from the first format, the first character string correctable by a user operation, the user operation to be input by using a display area of the first character string;
generating a search command comprising the first character string; and
transmitting the search command to the electronic device (200).

12. The computer program of Claim 11 causing the computer to further perform:
displaying a word related to the first character string selectable as a candidate word for correcting the first character string; and
after selection of any candidate word, generating a search command by replacing the first character string with the selected candidate word.

13. The computer program of Claim 12 causing the computer to further perform:
displaying number of words related to the first character string near an display area of the first character string.

14. The computer program of Claim 11 causing the computer to further perform:
displaying a third character string in the first format together with the first character string and the one or more second character strings,
wherein the sentence further includes the third character string which does not correspond to a reserved word but valid in searching information by the electronic device (200), and the third character string correctable by a user operation.
